# EUROPÄISCHE PATENTSCHRIFT

(11) **EP 3 434 071 B1**
(45) Veröffentlichungstag und Bekanntmachung des Hinweises auf die Patenterteilung: **03.03.2021**
(21) Anmeldenummer: 17706683.4
(22) Anmeldetag: 26.01.2017
(51) Int. Cl.: H05B 47/10, H05B 45/20, H05B 47/18

(54) **VERFAHREN UND VORRICHTUNG ZUR BIDIREKTIONALEN KOMMUNIKATION**
METHOD AND APPARATUS FOR BIDIRECTIONAL COMMUNICATION
PROCÉDÉ ET DISPOSITIF POUR LA COMMUNICATION BIDIRECTIONNELLE

(30) Priorität: 21.03.2016 DE 102016105263
(43) Veröffentlichungstag der Anmeldung: 30.01.2019
(60) Teilanmeldung: 20020544.1
(73) Patentinhaber: INOVA Semiconductors GmbH, 81671 München (DE)
(72) Erfinder: NEUMANN, Roland, 81671 München (DE)
(74) Vertreter: Reich, Jochen
(86) Internationale Anmeldenummer: PCT/EP2017/000093
(87) Internationale Veröffentlichungsnummer: WO 2017/162324

(56) Entgegenhaltungen:
- WO-A1-2013/095133
- DE-U1-202013 103 146

## Beschreibung

Die vorliegende Erfindung ist gerichtet auf ein Verfahren zur bidirektionalen Kommunikation zwischen einer Befehlseinheit und einer Mehrzahl von daran angeschlossenen LED-Steuereinheiten. Erfindungsgemäß ist es möglich, mehreren seriell geschalteten LED-Steuereinheiten mit hoher Geschwindigkeit Steuerbefehle zukommen zu lassen bzw. Ausführungsergebnisse von diesen Steuereinheiten an eine Befehlseinheit zurückzugeben. Somit leistet die vorliegende Erfindung ein hocheffizientes und damit hochperformantes Verfahren zur Kommunikation zwischen mehreren in Serie geschalteten Steuereinheiten. Die Erfindung ist ferner gerichtet auf eine entsprechende Vorrichtung zur bidirektionalen Kommunikation sowie ein Computerprogrammprodukt mit Steuerbefehlen zur Ausführung des Verfahrens.

US 2014/0 333 207 A1 bzw. WO 2013/095133 A1 zeigt eine Leuchtanordnung mit Leuchtdioden, welche gemäß des bekannten Daisy-Chaining-Verfahrens in Serie geschaltet sind und hierbei Statusinformation austauschen.

US 8 492 983 B1 zeigt ein System zum Kontrollieren von Leuchtdioden mittels einer seriellen Busleitung. Hierbei werden ein Empfangen eines Adressfelds sowie das Abändern eines Adressfelds vorgeschlagen.

US 2009/ 0 021 955 A1 zeigt ein Fahrzeug mit einer Beleuchtungsanordnung mit Leuchtdioden mitsamt entsprechender Ansteuerung DE 20 2013 103 146 U1 zeigt ein Gerätesystem mit Geräten zur verteilten Anordnung entlang von Rettungswegen.

Gemäß herkömmlicher Verfahren ist eine Vielzahl von Möglichkeiten bekannt, Steuereinheiten, welche seriell geschaltet sind, anzusprechen. Hierbei gibt es generische Ansätze, welche jedoch in spezifischen Anwendungsszenarien nachteilig sein können oder aber auch sehr spezielle Ansätze, welche nunmehr nicht mehr in generischer Weise einsetzbar sind. Bekannt ist beispielsweise der sogenannte CAN-Bus, welcher bezüglich Kabelbäume entwickelt wurde und insbesondere eine Vernetzung von Steuergeräten umsetzen soll. Der CAN-Bus sieht eine große Anzahl von Komponenten vor und benötigt eine Vielzahl von Sicherungsmechanismen, welche sicherstellen, dass keine Übertragungsfehler stattfinden. Ferner ist eine Vielzahl von Datenübertragungen notwendig, um die Integrität der Daten sicherzustellen. Hierzu wird eine Reihe von Vorkehrungen getroffen, welche wiederum Rechenressourcen und Bandbreite beanspruchen.

Ferner bekannt ist der sogenannte LIN-Bus, Local Interconnet Network Bus, welcher ebenfalls für serielle Kommunikationssysteme und insbesondere zur Vernetzung von Sensoren und Steuereinheiten entwickelt wurde. Bei dem LIN-Bus handelt es sich um einen generischen Ansatz, welcher für breitbandige Anwendungsszenarien typischerweise nicht Anwendung findet. Ferner muss gemäß dem LIN-Bus ebenfalls eine umfangreiche Fehlerbehandlung durchgeführt werden. So werden beispielsweise Prüfsummen berechnet und fehlerhaft erkannte Signale werden verworfen. Eine Fehlersignalisierung ist hierbei nicht Teil des Protokolls, sondern muss gegebenenfalls in einer weiteren Anwendungsschicht definiert werden.

Ferner sind eine Reihe von Kommunikationsprotokollen bekannt, welche eine Datenübermittlung in einem Kommunikationsnetzwerk veranlassen. Hierbei wird typischerweise eine zentrale Einheit gebildet, welche den Datenverkehr regelt. Dieser Stand der Technik sieht jedoch nicht vor, dass eine Mehrzahl von weiteren Steuereinheiten derart in Serie geschaltet ist, dass diese in Serie geschalteten Steuereinheiten eben keine Kommunikationsverwaltung übernehmen, sondern lediglich empfangene Befehle umsetzen. Vorteil von in Serie geschalteten Steuereinheiten ist es, dass diese eben keine Koordinierung der Netzwerkkommunikation steuern müssen, sondern, dass diese jeweils die gleichen Steuerbefehle von einer Steuereinheit empfangen können, diese selbst lediglich umsetzen müssen und weiterreichen können.

Somit lehrt der Stand der Technik lediglich Verfahren, welche zwar eine serielle Datenkommunikation ermöglichen, dies jedoch mit einem ungünstigen Verhältnis von Signalisierungsdaten bezüglich der Nutzdaten umsetzen und somit unnötigen Overhead erzeugen. Diese Verfahren sind entweder speziell für ein Anwendungsszenario implementiert und sind daher schlecht übertragbar oder sind derart generisch, dass ein Einsatz beispielsweise bei LED-Steuereinheiten nachteilig ist. Ferner weisen bekannte Verfahren den Nachteil auf, dass diese einen hohen technischen Aufwand mit sich bringen, da Steuerbefehle teilweise redundant in mehreren Netzwerkknoten ausgeführt werden müssen. So stellt bereits das Bereitstellen mehrerer Befehlseinheiten, welche die Kommunikation koordinieren, einen Nachteil dar.

Somit es eine Aufgabe der vorliegenden Erfindung, ein Verfahren bzw. eine Vorrichtung bereitzustellen, wodurch eine Kommunikation mit LED-Steuereinheiten in hoher Geschwindigkeit und mit wenig technischem Aufwand möglich ist. Der technische Aufwand soll dahingehend minimiert werden, dass sowohl die einzelnen Steuereinheiten mit möglichst wenig Hardwareressourcen ausgestattet sein müssen und auch die zu übertragenden Daten über Netzwerksegmente möglichst gering gehalten werden können. Es ist ferner eine Aufgabe der vorliegenden Erfindung, ein entsprechendes Computerprogrammprodukt bereitzustellen, welches Verfahrensschritte zum Ausführen des vorgeschlagenen Verfahrens mittels Befehlsinstruktionen abspeichert.

Die Aufgabe wird gelöst durch ein Verfahren und einer Vorrichtung zur bidirektionalen Kommunikation gemäß den Merkmalen der unabhängigen Ansprüche. Weitere vorteilhafte Ausgestaltungen sind in den Unteransprüchen angegeben.

Demgemäß wird ein Verfahren zur bidirektionalen Kommunikation zwischen einer Befehlseinheit und einer daran in Serie elektrisch angeschlossenen Mehrzahl von LED-Steuereinheiten vorgeschlagen. Das Verfahren umfasst ein Übermitteln eines Steuerbefehls von der Befehlseinheit an die angeschlossene LED-Steuereinheit sowie ein Ausführen des übermittelten Steuerbefehls in der LED-Steuereinheit und Weiterreichen des Steuerbefehls an die nächste angeschlossene LED-Steuereinheit, welche den Steuerbefehl nicht übermittelt hat, iterativ derart, dass jede LED-Steuereinheit den Steuerbefehl ausführt. Ferner erfolgt erfindungsgemäß ein Zurückgeben jeweils eines Ausführungsergebnisses des Steuerbefehls beginnend von der letzten in Serie geschalteten LED-Steuereinheit an die jeweils vorhergehende Einheit, wobei jede aus der Mehrzahl von LED-Steuereinheiten ihr Ausführungsergebnis an das jeweils empfangene Ausführungsergebnis anhängt, iterativ derart, dass die Befehlseinheit die Ausführungsergebnisse einer jeden LED-Steuereinheit empfängt.

Das Verfahren zur bidirektionalen Kommunikation sieht insbesondere eine bidirektionale Kommunikation derart vor, dass die Kommunikationsrichtung in logischer Weise bidirektional ist. Das heißt, dass nicht zu jedem Zeitpunkt ein Senden und Empfangen auf einem Datensegment gleichzeitig möglich sein muss. Insbesondere ist mit bidirektional ein zeitversetztes Senden und Empfangen auf den Kommunikationssegmenten, also der Datenleitung, vorgesehen. Somit ist es ein Aspekt der vorliegenden Erfindung, dass auch Kommunikationssegmente zumindest in eine Kommunikationsrichtung in einer Zeiteinheit gesperrt werden können. Die Befehlseinheit liegt hierbei als eine zentrale Komponente vor, welche aktiv die Kommunikation zwischen eben dieser Befehlseinheit und den daran in Serie elektrisch angeschlossenen Mehrzahl von LED-Steuereinheiten veranlasst. Somit ist in der Befehlseinheit gemäß einem Aspekt der Erfindung eine Logik implementiert, welche einen Kommunikationsvorgang veranlasst und diesen initial mittels eines Übersendens einer entsprechenden Nachricht an die erste angeschlossene LED-Steuereinheit initialisiert. Hierbei kann die Befehlseinheit auf einen Speicher zugreifen, welcher beispielsweise ein Kommunikationsprotokoll oder zumindest einzelne Steuerbefehle bereithält, welche an die erste angeschlossene LED-Steuereinheit übermittelt werden. Beispielsweise kann die Befehlseinheit als ein Mikrocontroller vorliegen.

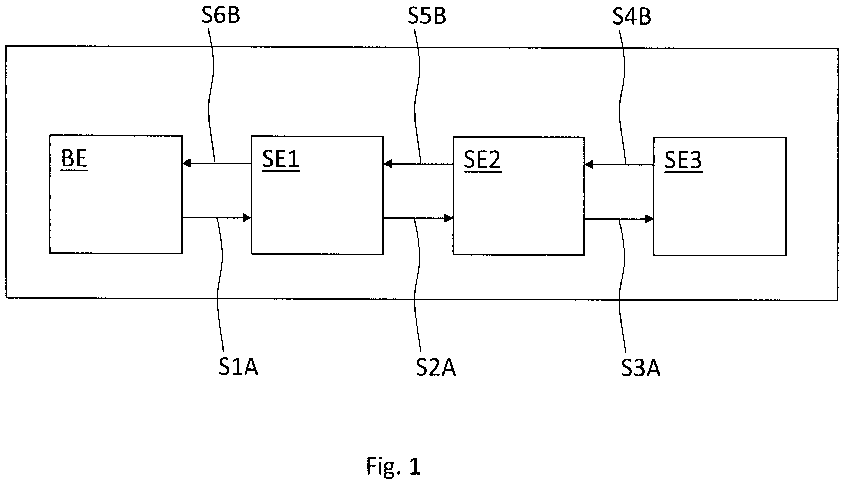

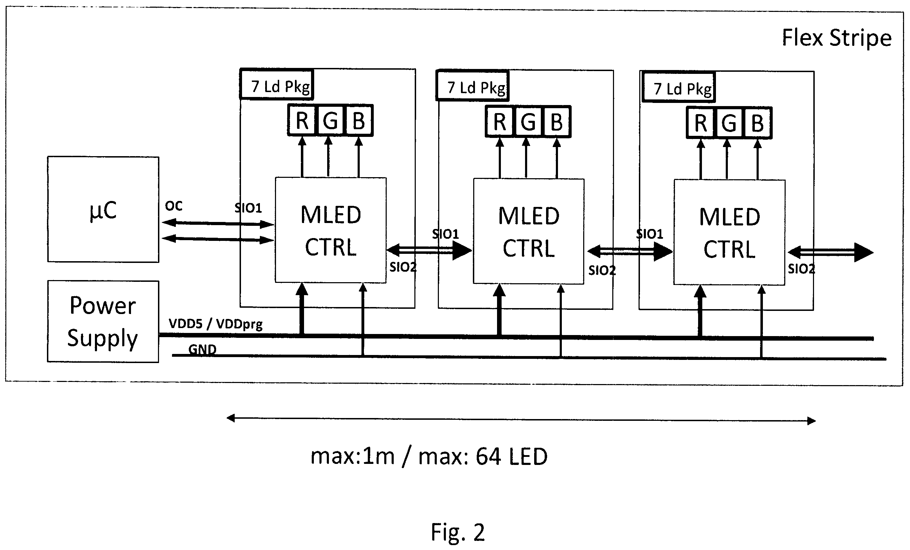

Die bidirektionale Kommunikation erfolgt über eine Topologie, welche vorsieht, dass die Befehlseinheit an einem Anfang einer in Serie elektrisch angeschlossenen Mehrzahl von LED-Steuereinheiten angeordnet ist. Somit ist an die Befehlseinheit direkt genau eine LED-Steuereinheit angeschlossen. Ein Anschließen erfolgt hierbei typischerweise mittels eines kommunikativen Koppelns der ersten LED-Steuereinheit an die Befehlseinheit. Elektrisch angeschlossen heißt insbesondere gemäß einem Aspekt der vorliegenden Erfindung, dass die Befehlseinheit derart eingerichtet ist, dass sie beispielsweise mittels eines Kommunikationssegments einer Datenleitung elektrische Signale an die erste LED-Steuereinheit übermittelt. Dadurch, dass eine Mehrzahl von LED-Steuereinheiten an die Befehlseinheit in Serie angeschlossen ist, ist eine LED-Steuereinheit aus der Mehrzahl der LED-Steuereinheiten an die Befehlseinheit angeschlossen und an diese eine LED-Steuereinheit ist wiederum genau eine weitere LED-Steuereinheit angeschlossen. Somit ergibt sich, dass die Befehlseinheit genau einen Ausgang bzw. Eingang in Richtung der ersten LED-Steuereinheit aufweist. Jede der LED-Steuereinheiten hat somit zwei Kommunikationsnachbarn, für den Fall, dass dies nicht die letzte LED-Steuereinheit ist. Ein Beispiel für solch eine Topologie ist unter anderem den Fig. 1 und 2 zu entnehmen.

Somit kann ein Übermitteln eines Steuerbefehls von der Befehlseinheit an die angeschlossene LED-Steuereinheit erfolgen. Die angeschlossene LED-Steuereinheit ist genau diejenige Steuereinheit, welche die erste Steuereinheit der Serie bildet. Da die LED-Steuereinheiten kettenartig, also in Serie, mit der Befehlseinheit verbunden sind, ist somit diese eine angeschlossene LED-Steuereinheit direkt mit der Befehlseinheit angeschlossen, während alle weiteren LED-Steuereinheiten indirekt an die Befehlseinheit gekoppelt sind. Ein Übermitteln eines Steuerbefehls erfolgt gemäß einem Aspekt der vorliegenden Erfindung derart, dass die Befehlseinheit einen elektrischen Impuls verursacht, welcher mittels einer Datenleitung bzw. einem Segment einer Datenleitung elektrisch an die LED-Steuereinheit übermittelt wird.

Ein Steuerbefehl kann hierbei mindestens eine Anweisung sowie weitere Parameter umfassen. Beispielsweise kann ein Steuerbefehl als eine Anweisung an alle LED-Steuereinheiten vorliegen. Hierbei ist es auch möglich, dass der Steuerbefehl nicht direkt von den LED-Steuereinheiten ausgeführt werden muss, sondern dass diese lediglich ein Veranlassen einer Ausführung des Steuerbefehls umsetzen. So können an die LED-Steuereinheiten weitere Einheiten, beispielsweise Sensoreinheiten, angeschlossen sein, an die eben dieser übermittelte Steuerbefehl adressiert ist. Der Fachmann kennt hierbei weitere Möglichkeiten, einen Steuerbefehl zu implementieren. Auch kann das Übermitteln eines Steuerbefehls weitere, beispielsweise vorbereitende Schritte umfassen. So ist es beispielsweise möglich, dass der Steuerbefehl erst in der Befehlseinheit erzeugt werden muss. Dies kann beispielsweise mittels eines Auslesens des Steuerbefehls aus einem Speicher erfolgen oder aber die Befehlseinheit erhält den Steuerbefehl von einer weiteren angeschlossenen Komponente. Auch kann der übermittelte Steuerbefehl von einem bereits empfangenen Ausführungsergebnis des erfindungsgemäßen Verfahrens abhängen. So kann eine Reihe von Steuerbefehlen vorliegen, wobei derjenige Steuerbefehl, welcher einem bestimmten Ausführungsergebnis zugeordnet ist, dann wiederum übermittelt wird. Somit erfolgt ein iteratives Übermitteln eines Steuerbefehls, ein Empfangen eines Ausführungsergebnisses sowie ein Erstellen eines neuerlichen Steuerbefehls in Abhängigkeit des empfangenen Ausführungsergebnisses.

Nach dem Übermitteln des Steuerbefehls wird der Steuerbefehl in der LED-Steuereinheit ausgeführt. Folglich wird ein Steuerbefehl empfangen und mit möglichst wenig weiteren Zwischenschritten ausgeführt. Beispielsweise kann ein unmittelbares Ausführen des Steuerbefehls erfolgen. Ein unmittelbares Ausführen des Steuerbefehls beschreibt hierbei eine Ausführung, welche keine weitere Interpretation des Steuerbefehls benötigt. Auch ist es erfindungsgemäß möglich, weitere Zwischenschritte, beispielsweise ein Zwischenspeichern des Steuerbefehls, auszulassen. Somit ist es auch möglich, den Steuerbefehl unmittelbar nach einem Ausführen und einem Weiterreichen des Steuerbefehls zu löschen.

Ein Ausführen des übermittelten Steuerbefehls kann beispielsweise derart erfolgen, dass die LED-Steuereinheit direkt mindestens eine LED, also eine Leuchtdiode, ansteuert. Hierbei ist es möglich, dass die LED-Steuereinheit eine Funktionalität veranlasst, welche von einer LED ausgeführt wird. Insbesondere sind hierbei ein Einstellen einer Helligkeit und/oder ein Einstellens eines Farbwerts der LED möglich. Ferner ist es möglich, dass eine LED-Steuereinheit genau eine Leuchtdiode ansteuert, oder aber, dass eine LED-Steuereinheit eine Mehrzahl von Leuchtdiodeneinheiten ansteuert. Insbesondere kann die LED-Steuereinheit vorgesehen sein, um einen bestimmten Farbwert durch die mehreren Leuchtdiodeneinheiten in deren Zusammenwirken bereitzustellen. Ferner kann aber auch nur ein einzelner Wert einer Leuchtdiode eingestellt werden, wobei weitere LED-Steuereinheiten weitere Werte von jeweils weiteren Leuchtdiodeneinheiten einstellen, derart, dass ein Mischverhältnis der einzelnen Leuchtdiodeneinheiten zum Aussenden eines gewissen Farbwerts führt. Somit kann über eine oder mehrere LED-Steuereinheiten ein bestimmter Farbwert und/oder eine bestimmte Helligkeit erreicht werden.

Ein Weiterreichen des Steuerbefehls kann beispielsweise derart erfolgen, dass die LED-Steuereinheit, welchen den Steuerbefehl empfangen hat, diesen unmittelbar an die nächste angeschlossene LED-Steuereinheit übermittelt. Hierbei impliziert ein Weiterreichen, dass möglichst wenig weitere Verarbeitungsschritte bezüglich des Steuerbefehls erfolgen sollen. So sind die in Serie elektrisch angeschlossenen LED-Steuereinheiten derart eingerichtet, dass diese den Steuerbefehl empfangen, ausführen und direkt weiterreichen. Insbesondere soll kein neuerliches Anpassen des Steuerbefehls erfolgen. Dies ermöglicht eine hocheffiziente Kommunikation derart, dass der Steuerbefehl von den einzelnen Einheiten unverändert oder zumindest im Wesentlichen unverändert an eine der Nachbareinheiten weitergereicht wird. So ist es erfindungsgemäß typischerweise nicht notwendig, dass der Steuerbefehl bezüglich einer Adresse angepasst werden muss. Beispielsweise ist es möglich, den Steuerbefehl schon vor eines Ausführens des Steuerbefehls oder während eines Ausführens des Steuerbefehls weiterzureichen. Somit ist es also erfindungsgemäß nicht notwendig, ein Abarbeiten des Steuerbefehls in einer LED-Steuereinheit abzuwarten. Vielmehr kann der Steuerbefehl unmittelbar nach einem Empfangen weitergereicht werden, wobei dieser lediglich derart in der LED-Steuereinheit vorhanden sein muss, dass ein Ausführen möglich ist. Dies ermöglicht ferner ein Verwerfen des Steuerbefehls unmittelbar nach dessen Ausführung.

Die nächste angeschlossene LED-Steuereinheit ist jeweils die unmittelbar benachbarte LED-Steuereinheit, von der der Steuerbefehl nicht übermittelt wurde. Aufgrund der Anordnung der LED-Steuereinheiten, welche eine Serie bzw. eine Kette vorsieht, hat jede LED-Steuereinheit, bis auf die letzte, genau zwei Kommunikationsnachbarn. Die erste in Serie geschaltete LED-Steuereinheit hat einen ersten Nachbarn, nämlich die Befehlseinheit, und einen zweiten Nachbarn, nämlich eine weitere LED-Steuereinheit. Die hieran angeschlossenen LED-Steuereinheiten haben als jeweiligen Nachbarn genau zwei LED-Steuereinheiten. Die letzte LED-Steuereinheit der Serie hat jedoch nur einen Nachbarn. Somit ist auf der Serie eine gewisse Reihenfolge definiert, derart, dass ein Übermitteln des Steuerbefehls von der Befehlseinheit mittels der einzelnen LED-Steuereinheiten an die letzte LED-Steuereinheit erfolgt. Somit gibt es unter den Einheiten stets eine sendende Einheit und eine empfangende Einheit. Dies impliziert auch die Kommunikationsrichtung der Leitungssegmente, welche die Einheiten verbinden.

Jede der LED-Steuereinheiten ist eingerichtet, den Steuerbefehl auszuführen und diesen weiterzuübermitteln. Ein tatsächliches Ausführen erfolgt in jeder der LED-Steuereinheiten, wobei die letzte LED-Steuereinheit den Steuerbefehl ausführt, diesen jedoch nicht weiterleitet. Generell sind alle LED-Steuereinheiten strukturell gleich aufgebaut, wobei ein Weiterreichen des Steuerbefehls von der jeweils letzten LED-Steuereinheit nicht ausgeführt wird, da diese eben keinen empfangenden Kommunikationsnachbar hat. Somit erfolgt also ein Durchreichen des Steuerbefehls durch jede der Einheiten, wobei dies iterativ so oft wiederholt wird, dass der Steuerbefehl in jeder der LED-Steuereinheiten vorliegt. Somit erfolgt ein Ausführen des übermittelten Steuerbefehls sowie ein Weiterreichen iterativ. Bei jedem Ausführen des Steuerbefehls entsteht ein Ausführungsergebnis. Gemäß einem Beispiel zum besseren Verständnis der Erfindung, jedoch nicht zur Erfindung gehörend, kann ein Ausführungsergebnis beispielsweise als ein Parameter vorliegen, welcher das Ergebnis einer Berechnung ist. Erfindungsgemäß ist das Ausführungsergebnis eine Statusinformation, welche lediglich beschreibt, dass der Steuerbefehl ausgeführt wurde.

Nachdem ein Ausführen des Steuerbefehls in jeder der LED-Steuereinheiten erfolgt ist, erfolgt ein Zurückgeben des Ausführungsergebnisses. Dies erfolgt erst nachdem in allen LED-Steuereinheiten der Steuerbefehl abgearbeitet wurde. Dies ist der Fall, da mit der letzten in Serie geschalteten LED-Steuereinheit begonnen wird. Bildlich gesprochen erfolgt ein Weiterreichen der Steuerbefehle in einem Beispiel von links nach rechts und falls der Steuerbefehl rechts angekommen ist, erfolgt ein Zurückgeben der jeweiligen Ausführungsergebnisse von rechts nach links. Hierbei wird das Ausführungsergebnis jeweils an die vorgehende LED-Steuereinheit weitergegeben. Die einzige Ausnahme stellt das Empfangen aller Ausführungsergebnisse durch die Befehlseinheit dar, wobei die erste in Serie geschaltete LED-Steuereinheit das Ausführungsergebnis an die Befehlseinheit weitergibt. Somit erfolgt ein Zurückgeben an die jeweils vorhergehende Einheit, also typischerweise LED-Steuereinheit, aber auch ein einmaliges Weitergeben an die Befehlseinheit.

Da die letzte in Serie geschaltete LED-Steuereinheit mit dem Zurückgeben ihres Ausführungsergebnisses des Steuerbefehls beginnt, liegen noch keine Ausführungsergebnisse vor, an die es seine Ausführungsergebnisse anhängen kann. Somit initialisiert die letzte in Serie geschaltete LED-Steuereinheit das Zurückgeben des Ausführungsergebnisses und übermittelt ihr Ausführungsergebnis an die vorletzte LED-Steuereinheit. Da ein Empfangen des Ausführungsergebnisses in der letzten LED-Steuereinheit ausbleibt, entspricht das Anhängen eines Ausführungsergebnisses in diesem Fall einem Initialisieren eines Rückgabewerts. Eine jede der LED-Steuereinheiten empfängt das vorherige Ausführungsergebnis und hängt das eigene Ausführungsergebnis kommunikativ daran an. Folglich erfolgt ein Aufaddieren bzw. Konkatenieren der einzelnen Ausführungsergebnisse und diese werden an einen Kommunikationspartner weitergereicht. Dies erfolgt derart iterativ, dass alle Ausführungsergebnisse zusammengehängt vorliegen und in einem letzten Verfahrensschritt an die Befehlseinheit zurückgegeben werden können. Somit ist es erfindungsgemäß möglich, dass das Ausführungsergebnis, welches zurückgegeben wird, anfangs kürzer ist als das Endergebnis, welches an die LED-Steuereinheit zurückgegeben wird. Dies ist insbesondere bei Serien von wenigen Einheiten vorteilhaft, da hier die zurückgegebenen Ausführungsergebnisse relativ zu herkömmlichen Verfahren gering sind. Hierbei sind die einzelnen Einheiten derart effizient aufgebaut, dass wiederum kein Abspeichern eines Ausführungsergebnisses notwendig ist, da die Ausführungsergebnisse empfangen, aufaddiert und weitergereicht werden. Dies wiederum bedeutet eine performante Kommunikation zwischen den Kommunikationspartnern.

Gemäß einem Ausführungsbeispiel ist es besonders vorteilhaft, dass das Ausführen der Steuerbefehle bereits parallelisiert werden kann. So können in einer ersten LED-Steuereinheit und in einer zweiten LED-Steuereinheit Rechenoperationen ausgeführt werden, während der Steuerbefehl an alle weiteren LED-Steuereinheiten weitergereicht wird. Dies ist der Fall, da eine Ausführung des Steuerbefehls vor einem Weiterreichen nicht abgewartet werden muss. Somit ist es erfindungsgemäß möglich, die Steuerbefehle in allen LED-Steuereinheiten parallel auszuführen für den Fall, dass diese unmittelbar nach dem Empfangen weitergereicht werden. Somit ist das vorgeschlagene Verfahren deutlich effizienter als bekannte Verfahren.

Gemäß einem Aspekt der vorliegenden Erfindung weist ein Ausführungsergebnis mindestens einen Rückgabewert aus einer Mehrzahl von Rückgabewerten auf, die Gruppe aufweisend ein Messergebnis, ein Berechnungsergebnis und eine Statusinformation. Dies hat den Vorteil, dass ein Ausführungsergebnis gemäß unterschiedlicher Rechenoperationen erstellt werden kann und dass das Ausführungsergebnis in Abhängigkeit des Steuerbefehls gemäß unterschiedlicher Anwendungsszenarien erstellt werden kann. Ferner ist es erfindungsgemäß möglich, dass lediglich kurze Ausführungsergebnisse zurückgegeben werden können. Beispielsweise kann es sich bei einer Statusinformation um ein einzelnes Bit oder ein einzelnes Kommunikationssignal handeln.

Gemäß einem weiteren Aspekt der vorliegenden Erfindung umfasst der Steuerbefehl mehrere Anweisungen. Dies hat den Vorteil, dass ein zusammengesetzter Steuerbefehl ermöglicht wird, welcher mehrere Rechenoperationen in der jeweiligen LED-Steuereinheit veranlasst bzw. auch Teilanweisungen an weitere angeschlossene Komponenten weitergereicht werden können. Ferner ist es möglich, dass der Steuerbefehl in Kopfdaten und Nutzdaten eingeteilt werden kann, derart, dass eine Adressinformation mitsamt Anweisungen übermittelt werden kann.

Gemäß einem weiteren Aspekt der vorliegenden Erfindung sind die LED-Steuereinheiten paarweise mittels jeweils eines Datenleitungssegments einer Datenleitung seriell verbunden. Dies hat den Vorteil, dass eine Datenleitung vorliegt, welche derart aufgeteilt ist, dass jeweils zwei LED-Steuereinheiten bzw. die Befehlseinheit und eine LED-Steuereinheit kommunikativ verbunden sind. Hierbei stellt die Datenleitung eine kommunikative Kopplung in logischer Weise zwischen den einzelnen Einheiten bereit. Die Datenleitung kann physisch als einzelne Datenleitungssegmente implementiert sein, wobei alle Einheiten paarweise verbunden sind. Die Datenleitungssegmente können jedoch auch Abschnitte einer gesamten Datenleitung, also eines Bus-Systems, darstellen, die die Kommunikation sicherstellt. Ein serielles Verbinden der Einheiten erfolgt derart, dass nur die jeweils äußeren Einheiten einen Kommunikationspartner aufweisen und die jeweils innenliegenden LED-Steuereinheiten zwei Kommunikationspartner aufweisen. Ein serielles Verbinden von Einheiten kann auch als ein Verketten von Einheiten beschrieben werden.

Gemäß einem weiteren Aspekt der vorliegenden Erfindung sind die Datenleitungssegmente unidirektional und bezüglich ihrer Kommunikationsrichtung einstellbar. Dies hat den Vorteil, dass eine hohe Bandbreite realisiert wird, da Datenleitungssegmente stets nur in eine Richtung senden bzw. empfangen. So ist es erfindungsgemäß möglich, ein Einstellen einer Richtung einer Datenleitung bzw. des Datenleitungssegments, zu veranlassen. Dies kann derart erfolgen, dass die beiden Einheiten, welche an das Datenleitungssegment angeschlossen sind, entweder auf sendend/empfangend oder auf empfangend/sendend geschaltet werden. Somit sind die angeschlossenen Einheiten entweder eingerichtet auf einem Datenleitungssegment zu empfangen oder auf einem Datenleitungssegment zu senden. Auf diese Weise kann eine Richtung des Datenleitungssegments bezüglich der Kommunikation festgelegt werden. Zwar können physische Datenleitungen typischerweise in beide Richtungen senden und empfangen, wobei es erfindungsgemäß aufgrund einer Effizienzsteigerung vorteilhaft ist, dass auf einem Datenleitungssegment entweder nur gesendet oder eben nur empfangen werden kann. Dies wird vorliegend als unidirektional beschrieben. Somit ist es erfindungsgemäß auch möglich, die Kommunikationsrichtung einzustellen. Dies hat den Vorteil, dass Fehler auf einer Empfangsstrecke minimiert werden können. Somit ist das vorgeschlagene Verfahren weniger fehleranfällig, was wiederum in einer Minimierung des technischen Aufwands resultiert. So sind verglichen mit herkömmlichen Verfahren weniger fehlerkorrigierende Maßnahmen notwendig. Insbesondere wird ein Neuübersenden von Information vermieden und ferner müssen die Kommunikationsteilnehmer weniger Aufwand bezüglich eines Detektierens und Beseitigens eines Fehlers aufwenden.

Gemäß einem weiteren Aspekt der vorliegenden Erfindung erfolgt das Einstellen der Kommunikationsrichtung in Abhängigkeit des empfangenen Steuerbefehls. Dies hat den Vorteil, dass die LED-Steuereinheiten selbsttätig nach einem Empfangen des Steuerbefehls die Kommunikationsrichtungen bezüglich angrenzender Datenleitungssegmente einstellen können. Somit ist es erfindungsgemäß möglich, einzustellen, dass alle LED-Steuereinheiten genau einen Steuerbefehl empfangen und auf dem Datenleitungssegment, auf dem der Steuerbefehl empfangen wurde, nicht mehr gehört werden muss. Hier kann die Richtung des Datenleitungssegments invertiert werden, da nach einem Empfangen eines Steuerbefehls auf diesem Datenleitungssegment stets ein Zurückgeben des Ausführungsergebnisses erfolgt. Somit lässt sich erfindungsgemäß die Kommunikationsrichtung effizient steuern.

Gemäß einem weiteren Aspekt der vorliegenden Erfindung beschreibt die Kommunikationsrichtung, ob eine der paarweisen LED-Steuereinheiten eine lesende Operation oder eine schreibende Operation auf dem Datenleitungssegment ausführt. Dies hat den Vorteil, dass die Datenleitung bzw. das Datenleitungssegment bezüglich einer nicht stattfindenden Kommunikation gesperrt werden kann. So erfolgt typischerweise nach einer lesenden Operation, nämlich dem Empfangen des Steuerbefehls, eine schreibende Operation, nämlich das Zurücksenden des Ausführungsergebnisses.

Gemäß einem weiteren Aspekt der vorliegenden Erfindung invertiert jede der LED-Steuereinheiten nach einem Empfangen des übermittelten Steuerbefehls die Kommunikationsrichtung des entsprechenden Datenleitungssegments selbsttätig. Dies hat den Vorteil, dass keine weitere Steuerungslogik vorzusehen ist, und dass die LED-Steuereinheiten ohne weitere Ansteuerung das anliegende Datenleitungssegment ansteuern können. Ebenfalls ist es in der Befehlseinheit möglich, nach einem Übersenden des Steuerbefehls, also nach einem Schreiben auf dem anliegenden Datenleitungssegment, dieses Datenleitungssegment lediglich abzuhören. Somit wird auf die Rückgabe des Ausführungsergebnisses gewartet.

Gemäß einem weiteren Aspekt der vorliegenden Erfindung invertiert jede der LED-Steuereinheiten nach dem Zurückgeben des Ausführungsergebnisses die Kommunikationsrichtung des entsprechenden Datenleitungssegments selbsttätig. Dies hat den Vorteil, dass, falls ein Ausführungsergebnis zurückgegeben wurde, wieder ein weiterer Steuerbefehl erwartet werden kann und somit das entsprechende Datenleitungssegment abgehört werden kann.

Gemäß einem weiteren Aspekt der vorliegenden Erfindung erfolgt das Weiterreichen des Steuerbefehls im Wesentlichen unmittelbar nach dem Ausführen innerhalb einer LED-Steuereinheit. Dies hat den Vorteil, dass weitere Rechenschritte vermieden werden, welche eine Effizienz des vorgeschlagenen Verfahrens beeinträchtigen würden. Ferner wird das Weiterreichen des Steuerbefehls nicht unnötig verzögert.

Gemäß einem weiteren Aspekt der vorliegenden Erfindung erfolgt das Weiterreichen des Steuerbefehls im Wesentlichen zeitgleich mit dem Ausführen innerhalb einer LED-Steuereinheit. Dies hat den Vorteil, dass das Abarbeiten des Steuerbefehls nicht abgewartet werden muss, sondern dass ein Weiterreichen und ein Ausführen des Steuerbefehls im Wesentlichen zeitgleich derart erfolgt, dass während der Abarbeitung des Steuerbefehls dieser schon an die nächste LED-Steuereinheit weitergegeben wird. Somit ist eine Parallelisierung in jeder der LED-Steuereinheiten möglich.

Die vorliegende Aufgabe wird auch gelöst durch eine Vorrichtung zur bidirektionalen Kommunikation zwischen einer Befehlseinheit und einer daran in Serie elektrisch angeschlossenen Mehrzahl von LED-Steuereinheiten gemäß dem Vorrichtungsanspruch 11.

Hierbei ist es besonders vorteilhaft, dass das vorgeschlagene Verfahren mittels der vorgeschlagenen Vorrichtung implementiert werden kann. Somit weist die vorgeschlagene Vorrichtung jeweils strukturelle Merkmale auf, welche ein Ausführen der entsprechenden Verfahrensschritte ermöglichen. Somit weist die erfindungsgemäße Vorrichtung im Wesentlichen alle Merkmale des erfindungsgemäßen Verfahrens in struktureller Form auf.

Die Aufgabe wird ferner gelöst durch ein Speichermodul mit Steuerbefehlen zum Ausführen eines Verfahrens gemäß einem der beschriebenen Aspekte. Das Speichermodul kann hierbei als ein Hardwarebaustein vorliegen oder aber auch als ein Computerprogrammprodukt auf einem entsprechenden Speichermedium.

Somit wird ein besonders effizientes und hochperformantes Verfahren zur Kommunikation von Komponenten vorgeschlagen.

Weitere vorteilhafte Ausgestaltungen werden im Folgenden unter Bezugnahme auf die beigefügten Figuren beschrieben. Es zeigen:
- Fig. 1:: ein schematisches Blockschaltbild zur Veranschaulichung des Verfahrens zur bidirektionalen Kommunikation bzw. des logischen Ablaufs einer Signalfolge der Vorrichtung zur bidirektionalen Kommunikation gemäß einem Aspekt der vorliegenden Erfindung;
- Fig. 2:: ein schematisches Blockschaltbild zur Veranschaulichung eines Aspekts der Vorrichtung zur bidirektionalen Kommunikation auf struktureller Ebene;
- Fig. 3:: eine schematische Darstellung einer LED-Steuereinheit gemäß einem Aspekt der vorliegenden Erfindung; und
- Fig. 4:: ein schematisches Zustandsdiagramm bzw. ein Ablaufdiagramm gemäß einem Aspekt des Verfahrens zur bidirektionalen Kommunikation gemäß der vorliegenden Erfindung.

Fig. 1 zeigt die erfindungsgemäße Vorrichtung, welche auch als eine Kommunikationsanordnung bzw. ein Kommunikationssystem beschrieben werden kann. In dem vorliegenden Aspekt ist die erfindungsgemäße Vorrichtung gezeigt, welche eine Befehlseinheit BE aufweist sowie drei Steuereinheiten SE1, SE2, SE3. Auf der linken Seite ist in Fig. 1 die Befehlseinheit BE dargestellt, welche kommunikativ mit einer Mehrzahl von LED-Steuereinheiten verbunden ist. Generell ist die Erfindung nicht auf irgendeine Anzahl von LED-Steuereinheiten beschränkt, sondern betrifft vielmehr eine beliebige Anzahl von LED-Steuereinheiten. Ferner ist es erfindungsgemäß besonders vorteilhaft, nicht nur LED-Steuereinheiten anzusteuern, sondern generell Steuereinheiten. Somit ist es erfindungsgemäß möglich, irgendwelche Steuereinheiten anzusprechen oder aber auch eine gemischte Menge von Steuereinheiten aufweisend LED-Steuereinheiten und sonstige Steuereinheiten, anzusprechen.

Da es sich im vorliegenden Beispiel um eine logische Funktionsbeschreibung handelt, ist die Datenleitung mit deren Datenleitungssegmenten derart eingezeichnet, dass in jeweils einer Richtung eine erste Menge von Datenleitungssegmenten S1A, S2A, S3A eingezeichnet ist und in eine zweite Richtung eine zweite Menge von Datenleitungssegmenten S4B, S5B, S6B eingezeichnet ist. Hierbei kann es sich jedoch in physischer Weise um jeweils ein Datenleitungssegment handeln. So können zum Beispiel die Datenleitungssegmente S2A und S5B als ein physisches Datenleitungssegment vorliegen. Auch muss die Datenleitung nicht einstückig vorliegen, sondern die einzelnen Datenleitungssegmente können als separate Datenleitungssegmente vorliegen, welche in ihrem Zusammenwirken die Datenleitung insgesamt bereitstellen.

Gemäß dem vorliegenden Aspekt ist die Befehlseinheit BE mit genau einer Steuereinheit SE1 verbunden, also ist die Steuereinheit SE1 an die Befehlseinheit BE angeschlossen. Ausgehend von der Befehlseinheit BE stellt die Steuereinheit SE1 den nächsten Kommunikationspartner dar. Da die einzelnen Steuereinheiten SE1, SE2, SE3 seriell an der Befehlseinheit BE angeschlossen sind, verfügt die Befehlseinheit BE über genau einen Kommunikationspartner, nämlich die Steuereinheit SE1. Die Befehlseinheit BE übermittelt nunmehr einen Steuerbefehl mittels der logischen Kommunikationsleitung S1A an die erste Steuereinheit SE1. Diese empfängt den Steuerbefehl und führt ihn aus. Entweder nach einem Ausführen des Steuerbefehls oder bereits mit dem Empfangen des Steuerbefehls leitet die Steuereinheit SE1 diesen an die nächste Steuereinheit SE2 mittels des Datenleitungssegments S2A an die Steuereinheit SE2 weiter. Somit ist die Steuereinheit SE2 bezüglich der Steuereinheit SE1 die nächste Steuereinheit. Dies ist der Fall, da es sich bei der Steuereinheit SE1 um diejenige Steuereinheit handelt, von der die Steuereinheit SE2 den Steuerbefehl empfangen hat. Somit erfolgt in der Steuereinheit SE1 ein Weiterleiten des Steuerbefehls an die nächste angeschlossene Steuereinheit SE2, welche den Steuerbefehl nicht übermittelt hat.

Da vorliegend der Steuerbefehl von der Befehlseinheit BE an die Steuereinheit SE1 übermittelt wurde, stellt in diesem Verfahrensschritt die Steuereinheit SE2 denjenigen Kommunikationspartner dar, welcher den Steuerbefehl nicht übermittelt hat. Dies wird derart iterativ ausgeführt, dass jede Steuereinheit den Steuerbefehl sukzessive empfängt. Somit sendet die Steuereinheit SE2 den Steuerbefehl an die Steuereinheit SE3 weiter. Im vorliegenden Beispiel stellt die Steuereinheit SE3 die letzte Steuereinheit dar, da diese nur einen Kommunikationspartner hat. Somit erfolgt ein Ausführen des Steuerbefehls in jeder der Steuereinheiten, wobei ein Weiterreichen des Steuerbefehls nur in den Steuereinheiten SE1 und SE2 erfolgt.

Ist der Steuerbefehl auf der rechten Seite in der Steuereinheit SE3 angekommen und haben alle Steuereinheiten den Steuerbefehl ausgeführt, erfolgt nunmehr ein Zurückgeben des jeweiligen Ausführungsergebnisses. Hierbei beginnt die Steuereinheit SE3 und übermittelt ihr Ausführungsergebnis, beispielsweise einen Parameter, an die Steuereinheit SE2. Die Steuereinheit SE2 empfängt diesen Wert, also das Ausführungsergebnis der Steuereinheit SE3, und hängt ihr eigenes Ausführungsergebnis an das empfangene Ausführungsergebnis an. Dieses Ausführungsergebnis wird an die Steuereinheit SE1 übermittelt, welches wiederum ihr Ausführungsergebnis anhängt und dieses zusammengesetzte Ausführungsergebnis an die Befehlseinheit BE übermittelt. Somit empfängt die Befehlseinheit BE alle Ausführungsergebnisse der angeschlossenen Steuereinheiten. Somit kann das jeweils empfangene und weitergeleitete Ausführungsergebnis als ein zusammengesetztes Ausführungsergebnis beschrieben werden, wobei ein zusammengesetztes Ausführungsergebnis alle Ausführungsergebnisse der vorhergehenden Steuereinheiten aufweist.

In dem vorliegenden Beispiel liegt die Datenleitung als mehrere Datenleitungssegmente vor. Diese können bezüglich ihrer Richtung derart eingestellt werden, dass diese lediglich eine unidirektionale Kommunikation ermöglichen. Somit ist in jeder Richtung jeweils die volle Bandbreite verfügbar. Während die Datenleitung als eine physische, einstückige Datenleitung vorliegen kann, ist es auch möglich, dass diese derart in einzelne Datenleitungssegmente unterteilt ist, dass diese Datenleitungssegmente in ihrem Zusammenwirken die Datenleitung bereitstellen. Vorliegend ist eine Datenleitung zwischen der Befehlseinheit BE und der ersten Steuereinheit SE1 derart eingerichtet, dass in eine erste Richtung ein Datenleitungssegment S1A vorgesehen ist und in einer zweiten Richtung ein Datenleitungssegment S6B vorgesehen ist. Somit soll verdeutlicht werden, dass die eine physische Datenleitung logisch gemäß je einer Richtung in Datensegmente aufteilbar ist.

Ferner ist es besonders vorteilhaft, dass die einzelnen Steuereinheiten bzw. die Befehlseinheit BE eingerichtet sind, die Kommunikationsrichtung auf den Datensegmenten bzw. Datenleitungssegmenten einzustellen. Beispielsweise empfängt die Steuereinheit SE2 mittels der Datenleitung bzw. mittels des Datenleitungssegments S2A einen Steuerbefehl und invertiert die Übertragungsrichtung auf der Datenleitung umgehend. Somit wird das Datenleitungssegment S2A abgeschaltet und das Datenleitungssegment S5B angeschaltet. Dies ist der Fall, da nach einem Empfangen eines Steuerbefehls auf einem Datenleitungssegment kein weiteres Empfangen von Daten erwartet wird, sondern vielmehr, dass der Parameter bzw. das Ausführungsergebnis zurückgegeben werden soll. Dies erfolgt in logischer Richtung über das Datenleitungssegment S5B. Ein Umschalten der Kommunikationsrichtung kann beispielsweise derart erfolgen, dass auf einem Datenleitungssegment, welches abgehört wird, nach einem vollständigen Empfangen eines Steuerbefehls auf diesem Datenleitungssegment nur noch in umgekehrter Richtung gesendet werden kann. Somit wird bei einem Ausführen und Weiterreichen eines Steuerbefehls unmittelbar im Anschluss die Übertragungsrichtung auf dem jeweiligen Datenleitungssegment invertiert.

Beispielsweise empfängt die Steuereinheit SE3 einen Steuerbefehl mittels des Datenleitungssegments S3A, führt diesen Steuerbefehl aus, ohne ihn weiterzuleiten und übermittelt das Ausführungsergebnis mittels des Datenleitungssegments S4B. Wurde das Ausführungsergebnis von der Steuereinheit SE2 empfangen, so kann die Übertragungsrichtung auf der Datenleitung zwischen SE2 und SE3 wieder derart invertiert werden, dass nunmehr die Kommunikationsrichtung S3A vorherrscht. Die Steuereinheit SE2 empfängt das Ausführungsergebnis und fügt ihr eigenes Ausführungsergebnis derart an das empfangene Ausführungsergebnis an, dass ein zusammengesetztes Ausführungsergebnis entsteht. Dieses wird mittels des Datenleitungssegments S5B an die Steuereinheit SE1 weitergeleitet.

Somit kann die Datenleitung segmentweise in ihrer Richtung eingestellt werden. Wird beispielsweise ein Steuerbefehl in der Steuereinrichtung SE1 ausgeführt, so ist es möglich, dass das Datenleitungssegment S6B freigeschaltet ist und in der anderen Richtung das Datenleitungssegment S2A freigeschaltet ist. Somit erfolgt die Kommunikationsrichtungseinstellung in Abhängigkeit des jeweiligen Zustands des Bearbeitens und Weiterleitens des Steuerbefehls.

Fig. 2 zeigt eine mögliche Ausgestaltung des vorgeschlagenen Systems bzw. der Kommunikationsanordnung. So ist vorliegend auf der linken Seite die Befehlseinheit BE als Mikrocontroller *µ*C ersichtlich, welche vorliegend an drei Steuereinheiten angeschlossen ist. Da die drei Steuereinheiten in Serie geschaltet sind, ist die Befehlseinheit mit einer Steuereinheit direkt verbunden und den weiteren Steuereinheiten indirekt verbunden. Bei den Steuereinheiten kann es sich um sogenannte Multi-LED-Controller handeln. Dies ist in der vorliegenden Fig. 2 als MLED CTRL eingezeichnet. Durch das einheitliche Bezugszeichen soll insbesondere verdeutlicht werden, dass die Steuereinheiten typischerweise gleich ausgestaltet sind. Wie vorliegend ersichtlich ist, handelt es sich bei den Leuchtdioden um RGB-(also rot, grün, blau) Leuchtdioden. Diese sind hierbei eingerichtet, einen bestimmten Farbwert mittels eines Mischverhältnisses der einzelnen Leuchtdiodeneinheiten einzustellen. Ferner ist in der vorliegenden Figur ersichtlich, dass weitere Komponenten je nach Bedarf vorzusehen sind. Beispielsweise kann es notwendig sein, eine Stromzufuhr bereitzustellen. Hierbei ist es jedoch auch möglich, diese Komponenten, beispielsweise die Stromzufuhr, extern bereitzustellen und lediglich anzuschließen.

Die Datenleitung ist vorliegend als Mehrzahl von Datenleitungssegmenten vorhanden, welche als bidirektionale Pfeile S101, SIO2 eingezeichnet sind.

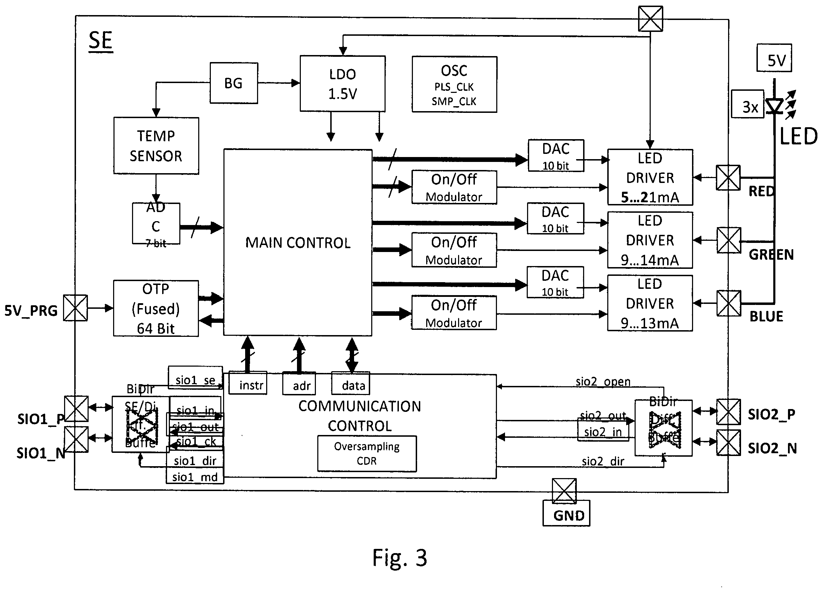

Fig. 3 zeigt eine Steuereinheit SE gemäß einem Aspekt der vorliegenden Erfindung. Wie in der vorliegenden Fig. 3 ersichtlich ist, kann diese Steuereinheit SE auch weitere Komponenten aufweisen. Insbesondere kann es sich hierbei um eine Steuereinheit handeln, welche analog der Steuereinrichtung MLED CTRL eingerichtet ist. So sind auf der rechten Seite der Fig. 3 einzelne Leuchtdiodeneinheiten vorgesehen, welche schematisch als eine einzelne Leuchtdiode LED vorliegt. Diese emittieren jeweils entweder rotes, grünes oder blaues Licht und stellen ein bestimmtes Mischverhältnis dieser Farben derart ein, dass insgesamt eine beliebige Farbe mittels der LED erzeugt werden kann. Ein Einstellen der Farbwerte kann beispielsweise mittels einer Pulsweitenmodulation PWM erreicht werden. Hierzu sind weitere Komponenten wie zum Beispiel ein On/Off-Modulator vorzusehen. Dem Fachmann sind hierbei weitere Komponenten bekannt, welche vorzusehen sind, beispielsweise ein LED-Driver. Insbesondere können herkömmliche Komponenten verwendet werden, wie sie ebenfalls in der Fig. 3 gezeigt werden. Deshalb wird hierzu auf eine Beschreibung verzichtet. Besonders vorteilhaft ist hierbei, dass das erfindungsgemäße Verfahren typischerweise mittels herkömmlicher Komponenten veranlasst werden kann, wobei diese lediglich derart angepasst werden, dass sie die einzelnen Verfahrensschritte ausführen. Insbesondere sei an dieser Stelle der Baustein "Communication Control" genannt, welcher beispielsweise das erfindungsgemäße Verfahren zumindest teilweise ausführen kann.

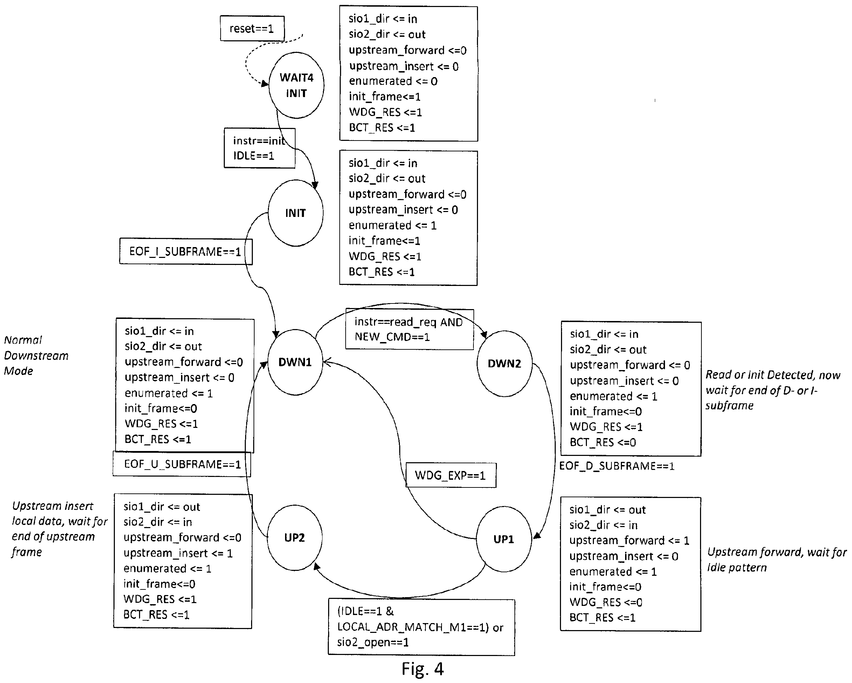

Fig. 4 zeigt eine technische Implementierung in Bezug auf einzelne Zustände, welche das System bzw. die erfindungsgemäße Vorrichtung durchlaufen kann. Beispielsweise wird derart auf die Fig. 2 und 3 Bezug genommen, dass das Attribut sio auf die entsprechenden Datenleitungssegmente anspielt. So beschreibt der Parameter sio1_dir eine Kommunikationsrichtung, welche beispielsweise als "in" oder "out" eingestellt werden kann. Beispielsweise kann in der Fig. 1 oder 2 ein Senden von links nach rechts als eine "downstream"-Richtung eingestellt werden und ein Übersenden von Information von rechts nach links als eine "upstream"-Richtung eingestellt werden. Wie die Parameter gemäß Fig. 4 einzustellen sind, weiß der Fachmann in Bezug auf die vorbeschriebenen Merkmale. Beispielsweise wird typischerweise eine 1 für das Vorhandensein eines bestimmten Ereignisses verwendet und eine 0 für eben ein Nichtvorhandensein eines bestimmten Ereignisses. Bei einem Einstellen einer Richtung kann beispielsweise wie folgt vorgegangen werden:

In einem ersten Zustand WAIT4INIT kann beispielsweise auf ein Initialisierungssignal bzw. eine Initialisierung gewartet werden. Falls es sich bei einem Steuerbefehl, also einer Instruktion instr um einen INIT-Befehl handelt und eine Initialisierung daraufhin abgeschlossen ist, geht die Steuereinheit in den Zustand INIT über. Somit wird die Kommunikationsrichtung "downstream" geschaltet DWN1. Somit kann in diesem Zustand abgewartet werden und in Abhängigkeit eines Empfangens eines Steuerbefehls in den Zustand DWN2 geschaltet werden. Hierbei ist die Kommunikationsrichtung noch immer auf "in" geschaltet. Falls der aktuell erhaltene Frame empfangen wurde und somit die Kommunikationsrichtung für ein Empfangen nicht mehr benötigt wird, so kann in die sogenannte "upstream"-Richtung geschaltet werden UP1. Ist somit die Kommunikationsrichtung auf "upstream" geschaltet, so kann beispielsweise ein Ruhezustand erfolgen UP2, also ein Abwarten, bis wieder ein Ergebnis zurückgegeben wurde oder es kann gleich wieder in die "down"-Richtung DWN1 geschaltet werden. Insbesondere soll hierbei verdeutlicht werden, dass die einzelnen Steuereinheiten in Abhängigkeit des Zustands des Abarbeitens des Steuerbefehls die Richtung selbsttätig einstellen. Hierzu bedarf es keiner weiteren Kommunikation, da die Steuereinheiten jeweils selbst Informationen über den jeweiligen Zustand zur Verfügung haben.

Somit wird erfindungsgemäß ein Verfahren und eine Vorrichtung geschaffen, welche eine effiziente und performante Kommunikation zwischen in Serie geschalteten Einheiten ermöglichen.

## Patentansprüche

1. Verfahren zur bidirektionalen Kommunikation zwischen einer Befehlseinheit (BE) und eine daran in Serie elektrisch angeschlossenen Mehrzahl von LED-Steuereinheiten (SE1, SE2, SE3), mit den Schritten:
- Übermitteln eines als Anweisung an alle LED-Steuereinheiten (SE1, SE2, SE3) gerichteten Steuerbefehls von der Befehlseinheit (BE) an die erste in Serie angeschlossene LED-Steuereinheit (SE1);
- Ausführen des übermittelten Steuerbefehls in der LED-Steuereinheit (SE1, SE2, SE3), die den Steuerbefehl empfangen hat, und unmittelbares Weiterreichen des unveränderten Steuerbefehls an die nächste angeschlossene LED-Steuereinheit (SE1, SE2, SE3), welche den Steuerbefehl nicht übermittelt hat, derart iterativ, dass jede LED-Steuereinheit (SE1, SE2, SE3) den gleichen Steuerbefehl empfängt und ausführt und diesen jeweils direkt nach dem Empfang vor der Ausführung oder während der Ausführung weiterreicht, und
- Zurückgeben jeweils eines Ausführungsergebnisses des Steuerbefehls beginnend von der letzten in Serie geschalteten LED-Steuereinheit (SE3) an die jeweils vorhergehende Einheit (BE, SE1, SE2), wobei jede aus der Mehrzahl von LED-Steuereinheiten (SE1, SE2) ihr Ausführungsergebnis an das jeweils empfangene Ausführungsergebnis anhängt, derart iterativ, dass die Befehlseinheit (BE) die Ausführungsergebnisse einer jeden LED-Steuereinheit (SE1, SE2, SE3) empfängt, **dadurch gekennzeichnet, dass** das Ausführungsergebnis eine Statusinformation ist, welche beschreibt, dass der Steuerbefehl ausgeführt wurde.

2. Verfahren nach Anspruch 1, wobei der Steuerbefehl mehrere Anweisungen umfasst.

3. Verfahren nach einem der vorhergehenden Ansprüche, wobei die LED-Steuereinheiten (SE1, SE2, SE3) paarweise mittels jeweils eines Datenleitungssegments (S1A, S2A, S3A; S4B, S5B, S6B) einer Datenleitung seriell verbunden sind.

4. Verfahren nach einem der vorhergehenden Ansprüche, wobei Datenleitungssegmente (S1A, S2A, S3A; S4B, S5B, S6B) unidirektional und bezüglich ihrer Kommunikationsrichtung einstellbar sind.

5. Verfahren nach einem der vorhergehenden Ansprüche, wobei das Einstellen einer Kommunikationsrichtung in Abhängigkeit des empfangenen Steuerbefehls erfolgt.

6. Verfahren nach einem der Ansprüche 3-5, wobei eine Kommunikationsrichtung beschreibt, ob eine von paarweisen LED-Steuereinheiten (SE1, SE2, SE3) eine lesende Operation oder eine schreibende Operation auf dem Datenleitungssegment (S1A, S2A, S3A; S4B, S5B, S6B) ausführt.

7. Verfahren nach einem der vorhergehenden Ansprüche, wobei jede der LED-Steuereinheiten (SE1, SE2, SE3) nach einem Empfangen des übermittelten Steuerbefehls eine Kommunikationsrichtung eines entsprechenden Datenleitungssegments (S1A, S2A, S3A; S4B, S5B, S6B) selbsttätig invertiert.

8. Verfahren nach einem der vorhergehenden Ansprüche, wobei jede der LED-Steuereinheiten (SE1, SE2, SE3) nach dem Zurückgeben des Ausführungsergebnisses eine Kommunikationsrichtung eines entsprechenden Datenleitungssegments (S1A, S2A, S3A; S4B, S5B, S6B) selbsttätig invertiert.

9. Verfahren nach einem der vorhergehenden Ansprüche, wobei das Weiterreichen des Steuerbefehls im Wesentlichen unmittelbar nach dem Ausführen innerhalb einer LED-Steuereinheit (SE1, SE2, SE3) erfolgt.

10. Verfahren nach einem der Ansprüche 1 bis 8, wobei das Weiterreichen des Steuerbefehls im Wesentlichen zeitgleich mit dem Ausführen innerhalb einer LED-Steuereinheit (SE1, SE2, SE3) erfolgt.

11. Vorrichtung zur bidirektionalen Kommunikation zwischen einer Befehlseinheit (BE) und einer daran in Serie elektrisch angeschlossenen Mehrzahl von LED-Steuereinheiten (SE1, SE2, SE3), aufweisend: - die Befehlseinheit (BE), welche zum Übermitteln eines als Anweisung an alle LED-Steuereinheiten (SE1, SE2, SE3) gerichteten Steuerbefehls an die erste in Serie angeschlossene LED-Steuereinheit (SE1) eingerichtet ist; - die Mehrzahl von LED-Steuereinheiten (SE1, SE2, SE3), welche jeweils eingerichtet sind zum Ausführen des übermittelten Steuerbefehls in der jeweiligen LED-Steuereinheit (SE1, SE2, SE3), die den Steuerbefehl empfangen hat, und zum unmittelbaren Weiterreichen des unveränderten Steuerbefehls an die nächste angeschlossene LED-Steuereinheit (SE1, SE2, SE3), welche den Steuerbefehl nicht übermittelt hat, derart iterativ, dass jede LED-Steuereinheit (SE1, SE2, SE3) den gleichen Steuerbefehl empfängt und ausführt und diesen jeweils direkt nach dem Empfang vor der Ausführung oder während der Ausführung weiterreicht, und - wobei die Mehrzahl von LED-Steuereinheiten (SE1, SE2, SE3) eingerichtet ist zum Zurückgegeben jeweils eines Ausführungsergebnisses des Steuerbefehls, beginnend von der letzten in Serie geschalteten LED-Steuereinheit (SE3) an die jeweils vorhergehende Einheit, wobei jede aus der Mehrzahl von LED Steuereinheiten (SE1, SE2) ihr Ausführungsergebnis an das jeweils empfangene Ausführungsergebnis anhängt, derart iterativ, dass die Befehlseinheit (BE) die Ausführungsergebnisse einer jeden LED-Steuereinheit (SE1, SE2, SE3) empfängt, **dadurch gekennzeichnet, dass** das Ausführungsergebnis eine Statusinformation ist, welche beschreibt, dass der Steuerbefehl ausgeführt wurde.

12. Speichermodul mit Steuerbefehlen, die bei einer Ausführung durch eine Steuerungsvorrichtung gemäß Anspruch 11 diese veranlassen das Verfahren gemäß einem der Ansprüche 1 bis 10 auszuführen.

## Claims

1. A method for bidirectional communication between a command unit (BE) and a serially and electrically connected plurality of LED control units (SE1, SE2, SE3), the method comprising the following steps:
- transmitting a control command as an instruction directed to all LED control units (SE1, SE2, SE3) from the command unit (BE) to the first in series connected LED control unit (SE1);
- executing the transmitted control command in the LED control unit (SE1, SE2, SE3) which first received the control command and immediate passing-on of the unchanged control command to the next connected LED control unit (SE1, SE2, SE3) which did not transmit the control command, iteratively in such a way that each LED control unit (SE1, SE2, SE3) receives the same control command and executes it and immediately passes the same directly after reception before the execution or during the execution on; and
- respectively returning an execution result of the control command, starting from the last serially connected LED control unit (SE3) to the respective previous unit (BE, SE1, SE2), wherein each of the plurality of LED control units (SE1, SE2) attaches its execution result to the received execution result in an iterative way such that the control unit (BE) receives the execution results of each LED control unit (SE1, SE2, SE3), **characterized in that** the execution result is a status information describing how the execution of the control command was performed.

2. The method according to claim 1, wherein the control command includes several instructions.

3. The method according to one of the preceding claims, wherein the LED control units (SE1, SE2, SE3) are connected serially in pairs by means of a respective data line segment (S1A, S2A, S3A; S4B, S5B, S6B) of a data line.

4. The method according to one of the preceding claims, wherein the data line segments (S1A, S2A, S3A; S4B, S5B, S6B) are unidirectional and adjustable in regard to their direction of communication.

5. The method according to one of the preceding claims, wherein the adjustment of the direction of communication is carried out depending on the received control command.

6. The method according to one of claims 3 - 5, wherein the direction of communication describes if one of the paired LED control units (SE1, SE2, SE3) executes a reading operation or a writing operation on the data line segment (S1A, S2A, S3A; S4B, S5B, S6B).

7. The method according to one of the preceding claims, wherein each of the LED control units (SE1, SE2, SE3) inverts the direction of communication of the respective data line segment (S1A, S2A, S3A; S4B, S5B, S6B) after the receipt of the transmitted control command on its own.

8. The method according to one of the preceding claims, wherein each of the LED control units (SE1, SE2, SE3) inverts the direction of communication of the respective data line segment (S1A, S2A, S3A; S4B, S5B, S6B) after the return of the execution result on its own.

9. The method according to one of the preceding claims, wherein the passing-on of the control command is carried out substantially immediately after its execution in an LED control unit (SE1, SE2, SE3).

10. The method according to one of claims 1 to 8, wherein the passing-on of the control command is carried out substantially at the same time as its execution in an LED control unit (SE1, SE2, SE3).

11. An apparatus for bidirectional communication between a command unit (BE) and a plurality of serially and electrically connected LED control units (SE1, SE2, SE3), comprising:
- the command unit (BE) which is configured for transmission of a control command directed to all LED control units (SE1, SE2, SE3) to the first in series connected LED control unit (SE1);
- the plurality of LED control units (SE1, SE2, SE3), each being configured for execution of the transmitted control command in the respective LED control unit (SE1, SE2, SE3) which has received the control command and for immediate passing-on of the control command to the next connected LED control unit (SE1, SE2, SE3) which has not yet transmitted the control command, in an iterative manner, such that each LED control unit (SE1, SE2, SE3) receives the same control command and executes it and immediately passes the same directly after reception before the execution or during the execution on, wherein the plurality of LED control units (SE1, SE2, SE3) is configured for return of a respective execution result of the control command, starting from the last of the serially connected LED control units (SE3) to the respective previous unit, wherein each of the plurality of LED control units (SE1, SE2) attaches its execution result to the respective received execution result, in an iterative manner, such that the command unit (BE) receives the execution results of each of the control units (SE1, SE2, SE3), **characterized in that** the execution result is a status information describing how the execution of the control command was performed.

12. A memory module comprising control commands for executing a method according to one of claims 1 to 10.

## Revendications

1. Procédé pour la communication bidirectionnelle entre une unité d'instruction (BE) et une pluralité d'unités de commande de LED (SE1, SE2, SE3) connectées électriquement en série à celle-ci, comportant les étapes consistant à :
- transmettre une instruction de commande adressée en tant qu'ordre à toutes les unités de commande de LED (SE1, SE2, SE3) par l'unité d'instruction (BE) à la première unité de commande de LED (SE1) connectée en série ;
- exécuter l'instruction de commande transmise dans l'unité de commande de LED (SE1, SE2, SE3) qui a reçu l'instruction de commande, et transférer immédiatement l'instruction de commande inchangée à l'unité de commande de LED (SE1, SE2, SE3) connectée suivante qui n'a pas transmis l'instruction de commande, de manière itérative de telle sorte que chaque unité de commande de LED (SE1, SE2, SE3) reçoive et exécute la même instruction de commande et la transfère chaque fois immédiatement après la réception avant l'exécution ou pendant l'exécution, et
- renvoyer un résultat d'exécution respectif de l'instruction de commande en commençant par la dernière unité de commande de LED (SE3) connectée en série à l'unité précédente respective (BE, SE1, SE2), chacune de la pluralité d'unités de commande de LED (SE1, SE2) ajoutant son résultat d'exécution au résultat d'exécution reçu respectif, de manière itérative de telle sorte que l'unité d'instruction (BE) reçoive les résultats d'exécution de chaque unité de commande de LED (SE1, SE2, SE3),
**caractérisé en ce que** le résultat d'exécution est une information d'état qui décrit que l'instruction de commande a été exécutée.

2. Procédé selon la revendication 1, dans lequel l'instruction de commande comprend plusieurs ordres.

3. Procédé selon l'une des revendications précédentes, dans lequel les unités de commande de LED (SE1, SE2, SE3) sont reliées en série par paires au moyen d'un segment de ligne de données respectif (S1A, S2A, S3A ; S4B, S5B, S6B) d'une ligne de données.

4. Procédé selon l'une des revendications précédentes, dans lequel les segments de ligne de données (S1A, S2A, S3A ; S4B, S5B, S6B) sont unidirectionnels et réglables en ce qui concerne leur direction de communication.

5. Procédé selon l'une des revendications précédentes, dans lequel le réglage d'une direction de communication est effectué en fonction de l'instruction de commande reçue.

6. Procédé selon l'une des revendications 3 à 5, dans lequel une direction de communication décrit si l'une des unités de commande de LED appariées (SE1, SE2, SE3) effectue une opération de lecture ou une opération d'écriture sur le segment de ligne de données (S1A, S2A, S3A ; S4B, S5B, S6B).

7. Procédé selon l'une des revendications précédentes, dans lequel chacune des unités de commande de LED (SE1, SE2, SE3) inverse automatiquement une direction de communication d'un segment de ligne de données correspondant (S1A, S2A, S3A; S4B, S5B, S6B) après avoir reçu l'instruction de commande transmise.

8. Procédé selon l'une des revendications précédentes, dans lequel chacune des unités de commande de LED (SE1, SE2, SE3) inverse automatiquement une direction de communication d'un segment de ligne de données correspondant (S1A, S2A, S3A ; S4B, S5B, S6B) après avoir renvoyé le résultat d'exécution.

9. Procédé selon l'une des revendications précédentes, dans lequel le transfert de l'instruction de commande a lieu sensiblement immédiatement après l'exécution dans une unité de commande de LED (SE1, SE2, SE3).

10. Procédé selon l'une des revendications 1 à 8, dans lequel le transfert de l'instruction de commande a lieu sensiblement en même temps que l'exécution dans une unité de commande de LED (SE1, SE2, SE3).

11. Dispositif pour la communication bidirectionnelle entre une unité d'instruction (BE) et une pluralité d'unités de commande de LED (SE1, SE2, SE3) connectées électriquement en série à celle-ci, comportant :
- l'unité d'instruction (BE), qui est conçue pour transmettre une instruction de commande adressée en tant qu'ordre à toutes les unités de commande de LED (SE1, SE2, SE3) à la première unité de commande de LED (SE1) connectée en série ;
- la pluralité d'unités de commande de LED (SE1, SE2, SE3), qui sont conçues chacune pour exécuter l'instruction de commande transmise dans l'unité de commande de LED respective (SE1, SE2, SE3) qui a reçu l'instruction de commande et pour transférer l'instruction de commande inchangée directement à l'unité de commande de LED (SE1, SE2, SE3) connectée suivante qui n'a pas transmis l'instruction de commande, de manière itérative de telle sorte que chaque unité de commande de LED (SE1, SE2, SE3) reçoive et exécute la même instruction de commande et la transfère chaque fois directement après la réception avant l'exécution ou pendant l'exécution, et
- dans lequel la pluralité d'unités de commande de LED (SE1, SE2, SE3) sont conçues pour renvoyer chaque fois un résultat d'exécution de l'instruction de commande, en commençant par la dernière unité de commande de LED (SE3) connectée en série à l'unité précédente respective, chacune de la pluralité d'unités de commande de LED (SE1, SE2) ajoutant son résultat d'exécution au résultat d'exécution reçu respectif, de manière itérative de telle sorte que l'unité d'instruction (BE) reçoive les résultats d'exécution de chaque unité de commande de LED (SE1, SE2, SE3), **caractérisé en ce que** le résultat d'exécution est une information d'état qui décrit que l'instruction de commande a été exécutée.

12. Module de mémoire contenant des instructions de commande qui, lorsqu'elles sont exécutées par un dispositif de commande selon la revendication 11, amènent celui-ci à exécuter le procédé selon l'une des revendications 1 à 10.
